# EUROPEAN PATENT SPECIFICATION

(11) **EP 2 411 216 B1**
(45) Date of publication and mention of the grant of the patent: **21.03.2018**
(21) Application number: 10756470.0
(22) Date of filing: 24.03.2010
(51) Int. Cl.: C23C 4/04, C23C 4/06, C23C 4/08, C23C 4/16, F01D 5/00

(54) **COATING OF FATIGUE CORROSION CRACKED METALLIC TUBES**
BESCHICHTUNG VON DURCH ERMÜDUNGSKORROSION GEBROCHENEN METALLRÖHREN
REVÊTEMENT DE TUBES MÉTALLIQUES FISSURÉS PAR CORROSION DUE À LA FATIGUE

(30) Priority: 24.03.2009 US 210902 P
(43) Date of publication of application: 01.02.2012
(73) Proprietor: General Electric Technology GmbH, 5400 Baden (CH)
(72) Inventor: SEITZ, Michael, W., Houston, TX 77040 (US)
(74) Representative: General Electric Technology GmbH
(86) International application number: PCT/US2010/000859
(87) International publication number: WO 2010/110874

(56) References cited:
- BE-A6- 1 000 078
- US-A- 5 527 445
- US-A1- 2004 247 946
- US-A1- 2006 169 363
- US-A1- 2008 163 792
- US-A1- 2008 199 722
- US-B2- 6 861 612

## Description

### Technical Field

In one aspect, this invention relates to a fatigue corrosion cracked metallic tube that has been coated with a high temperature, corrosion and erosion resistant metallic coating. In another aspect, this invention relates to a method for coating fatigue corrosion cracked metallic tubes.

### Background Art

In the past, tube areas exhibiting fatigue corrosion cracking, also known as circumferential fatigue cracks or stress corrosion cracks, were repaired during outages by replacing the damaged sections of the tube with new tubing, in a labor and materials intensive operation.
The mechanism causing the cracks is poorly understood, but is typically ascribed to one or more of pure thermal fatigue, a combination of mechanical fatigue and corrosion, and pure corrosion, with the products of corrosion being subject to cyclic fatigue and cracking.

US 2008/0163792 describes tubes in a circulating fluidised bed boiler with locally thickened side walls to prevent tube failure. US 2004/0247946 describes a composite wire for producing a wear resistant and corrosion resistant coating on a substrate by thermal spraying. BE 1000078 describes a process for depositing a covering material on the internal wall of a tube.

### Disclosure of Invention

An object of this invention is to coat fatigue corrosion cracked metallic tubes with a thermal spray technique with the aim to prevent further tube damage from the propagation of the cracks or the formation of new cracks.
In one embodiment of the invention, there is provided a coated metallic tube. The tube is defined by an axially elongated tubular sidewall having a fatigue corrosion cracked outer section. The fatigue corrosion cracked section has circumferentially extending cracks projecting radially inwardly partway through the tubular sidewall. A metallic coating is provided on the fatigue corrosion cracked section. The metallic coating bridges the circumferentially extending cracks and adheres to metal portions of the tube, and to the corrosion products, typically iron oxide and iron sulfide, that may remain in the crack, thereby covering the section with a metal coating.

In another embodiment of the invention, there is provided a method for arresting fatigue corrosion cracking in a metallic tube and preventing further fatigue corrosion cracking of the tube. The method comprises identifying a section of the tube having the fatigue corrosion cracking, cleaning the section by particle impingement process, and applying a metallic coating to the section by thermal spray technique to coat the section. The metallic coating is selected from nickel/chrome/boron and chrome-free base metal/aluminum//titanium/silicon/boron compositions.

### Brief Description of the Drawings

Figure 1 pictorially illustrates a portion of a tube water wall in used condition.
Figure 2 pictorially illustrates the tube water wall portion of Figure 1 after sand blasting.
Figure 3 pictorially illustrates a cross section of a fatigue corrosion crack with the crack and the corrosion product clearly illustrated.
Figure 4 pictorially illustrates localized compositional information of a fatigue corrosion crack.

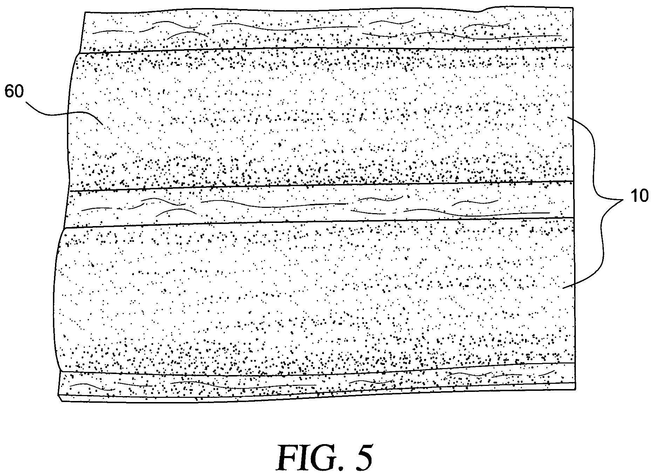

Figure 5 pictorially illustrates the water wall portion of Figure 2 after coating in accordance with an embodiment of the invention.
Figure 6 pictorially illustrates a section of a water wall tube after coating in accordance with an embodiment of the invention.
Figure 7 illustrates pictorially in longitudinal section a coated tube in accordance with an embodiment of the invention. The coating is not to scale.
Figure 8 illustrates in cross section the coated tube of Figure 7 when viewed along lines 8-8.

### Best Mode for Carrying out the Invention

The invention relates to employing thermal spraying techniques with specialized wires to coat circumferential fatigue corrosion cracks in metallic tubes, for example, boiler tubes, to arrest the cracking and prevent new cracks from forming. These cracks typically occur on water wall boiler tubes which are subject to operating conditions which include locally higher operating temperature, localized thermal cycling, for example, that caused by periodic slag shedding from the tube surface, and a corrosive high temperature environment, high in S and/or Cl.

Thermal spraying, i.e., the generic name for a class of processes that allow the depositing molten or semi-molten materials onto a substrate to form a wear or corrosion resistant coating, has been known in various forms for many years. However, it is not believed to have heretofore been used to arrest fatigue corrosion cracking. Thermal spraying processes include plasma, flame, arc-plasma, arc and combustion spraying. Arc spraying is a form of thermal spraying which involves feeding two electrically conductive wires toward one another so that an arc is struck between the tips of the wires to melt the wire tips. The molten material is then atomized and sprayed onto a substrate by compressed gas, which, after cooling, provides a high performance metallic coating.

The metallic coatings utilized in the invention to arrest fatigue corrosion cracking can be selected from a chrome-containing metallic coating and a chrome-free metallic coating.

### Chrome-containing metallic coating

An example of the chrome-containing metallic coating useful in the invention is a nickel/chrome/boron composition which has been applied by a thermal spray technique. The composition usually comprises, in bulk on a weight basis, about 39% to about 66% Nickel, about 29 % to about 51% Cr, and about 2% to about 8%B. Other materials may be substituted for the Ni component if desired. For example, iron, carbon and low alloy steels, stainless steels, copper, copper alloys (e.g., brasses, bronzes, and aluminum bronzes), aluminum, aluminum alloys (e.g., aluminum-copper, aluminum-manganese, aluminum-manganese-magnesium, aluminum-silicon, aluminum-manganese-magnesium-chrome, aluminum-magnesium-silicon, and aluminum-zinc-manganese-magnesium-copper), titanium, titanium alloys (e.g., titanium alloyed with palladium, molybdenum, nickel, aluminum, vanadium, niobium, tantalum, tin, zirconium, chromium and iron), cobalt, cobalt alloys (e.g., cobalt alloyed with chromium, nickel, molybdenum, and tungsten), zirconium, zirconium alloys, tantalum and tantalum alloys can be substituted for all or part of the Ni component.

In the coating, a portion of the Ni and a portion of the Cr preferably exist as hard borides. The coating composition can further comprise, in bulk on a weight basis, at least one additional constituent selected from the group consisting of up to about 6% Si, up to about 10% Mo, up to about 6% Nb, up to about 5% Al, up to about 4% Ti, up to about 9% Fe, up to about 10% W, and up to about 4% C. If any such additional constituent is present, it will generally be in the range of about 0.5 to about 6% Si, about 0.5% to about 10% Mo, about 0.5% to about 6% Nb, about 0.5% to about 5% Al, about 0.5% to about 4% Ti, about 0.5% to about 9% Fe, about 0.5% to about 10% W, and about 0.5% to about 4% C.

### Cored wire for producing the Chrome-containing metal coating

The coating is formed by providing a cored wire and applying it to the substrate by a thermal spray technique, for example, an arc-based spray technique. The cored wire contains all the alloy constituents that comprise the final coating deposit. The cored wire contains a chrome constituent and a boron constituent in the core of the wire and preferably further comprises a nickel or nickel alloy outer sheath. The wire is arc melted by thermal spray technique to form a molten alloy coating composition. The molten alloy coating composition is applied onto a substrate and permitted to solidify to form the alloy coating deposit. The alloy coating deposit comprises discrete discernable layers of segregated alloy compositions.

In a preferred embodiment, the cored wires comprise an outer tubular sheath formed from a chromium bearing, nickel base alloy such as an alloy 690, and an inner core, which comprises boron carbide and chrome carbide. The preferred inner core formulation preferably comprises chrome carbide in an amount between about 25% and about 400% by weight of the amount of boron carbide. In other words, the ratio of chrome carbide to boron carbide preferably ranges between about 1:4 to about 4:1. More preferably, the inner core comprises chrome carbide in an amount between about 67% and about 230% by weight of the amount of boron carbide. In other words, the ratio of chrome carbide to boron carbide preferably ranges between about 1:1.5 to about 2.3:1.

### Chrome-free metallic coating

An example of a chrome-free metallic coating useful in the invention is a base-metal/aluminum//titanium/silicon/boron composition which has been applied by thermal spray technique. The composition usually comprises, in bulk on a weight basis, about 60 to about 90% of base-metal, at least about 2% aluminum, about 2% to about 10% titanium, about 2 % to about 10% silicon, and about 2 % to about 10% boron and is chromium-free. The base-metal constituent usually comprises at least one base metal selected the group consisting of iron, nickel, cobalt, lead, zinc, copper, tin, and aluminum. The base-metal is preferably selected from the group consisting of at least one of nickel, iron and cobalt, and is most preferably nickel. The coating can contain additional constituents if desired, for example, additional constituents selected from the group consisting of about 0.1 % to about 10% iron, about 0.1 % to about 10% molybdenum, about 0.1 % to about 10% tungsten, and 0 % to about 10% carbon.

### Composite wires for producing chrome-free coating

The chrome-free coatings of the present invention can be formed from composite wires applied by thermal spray technique. Usually, the composite wire comprises a metallic outer sheath in the range of 70 to 95% by weight and an inner core in the range of about 5 % to about 30% by weight. In a preferred embodiment, the composite wire comprises a metallic outer sheath in the range of about 75% to about 85% by weight and an inner core in the range of about 15% to about 25% by weight.

The base-metal is preferably a relatively soft elemental metal or alloy, for example, at least one of nickel, iron, or cobalt. Nickel is preferred, and the outer sheath most preferably comprises an alloy of nickel and aluminum and/or silicon. Exemplary materials comprise in the range of about 70 to about 98 percent by weight of nickel and in the range of about 2 to about 30 percent by weight of aluminum and/or silicon, preferably in the range of about 85 to about 98 percent by weight of nickel and in the range of about 2 to about 15 percent by weight aluminum and/or silicon, and most preferably about 90 to about 97 percent by weight of nickel and in the range of about 3 to about 10 percent by weight of aluminum.

The inner core in one embodiment of the invention comprises in the range of about 15% to about 30% titanium, in the range of about 15% to about 35% silicon, in the range of about 20% to about 50% boron, and in the range of 0% to 15% carbon, all preferably in particle, preferably powdered, mixture form. The titanium, silicon and boron may be present as a mixture of compounds containing additional elements. The titanium and silicon can be provided by a suitable amount of a TiSi source, for example, in the range of about 50 to about 60% of a TiSi source such as TiSiFe in admixture with a source of boron and optional carbon, for example, B₄C in an amount of about 40 to about 50%.

The inner core may also contain additional materials. The additional materials may include: carbides, such as tungsten carbide, titanium carbide, vanadium carbide, and the like; oxides, such as aluminum oxide, zirconium oxide, and the like; and borides, such as nickel boride, iron boride, and the like. The inner core may also include additional metal powders, such as aluminum, nickel, or alloy powder, or composite powders, such as tungsten carbide nickel. As an example, the inner core can include in the range of about 0.1 to about 10% molybdenum, about 0.1 to about 10% tungsten, about 0.1 to about 10% neodymium, and about 0.1 to about 10% carbon. Further, metal or metal alloy powders comprising magnesium, phosphorus, vanadium, manganese, iron, cobalt, nickel, copper, zirconium, niobium, molybdenum, tantalum and/or tungsten may be present in the inner core, for example, in the range of about 0.1 to about 10%.

### Production of cored wires

The cored wires employed to produce either type of coating may be formed in a conventional manner by placing the mix for forming the inner core, which need not be an agglomerated mix, onto the strip to be made into the outer metallic sheath. The strip can be drawn continuously through a plurality of wire drawing dies to form an outer wire sheath around an inner core. The final outer diameter of the cored wire will depend upon the application for which it is used. For most applications, the cored wire final diameter ranges between about 0.8 mm and about 6.4 mm. Conventional cored wire manufacturing techniques are disclosed in U.S. Patent Nos. 6,156,443 (Dallaire et al.) and 6,513,728 (Hughes et al.), both being hereby incorporated by reference.

### Carrying out the invention

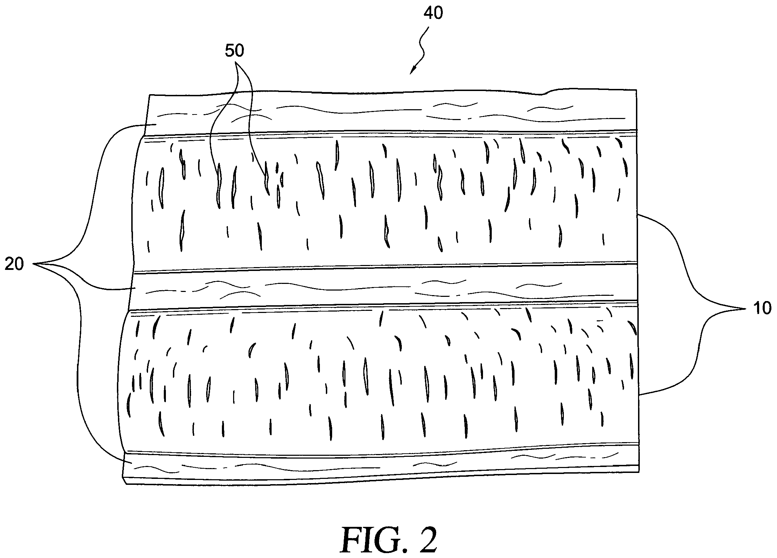

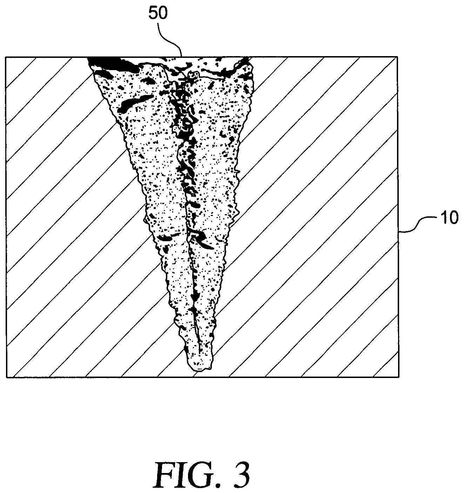

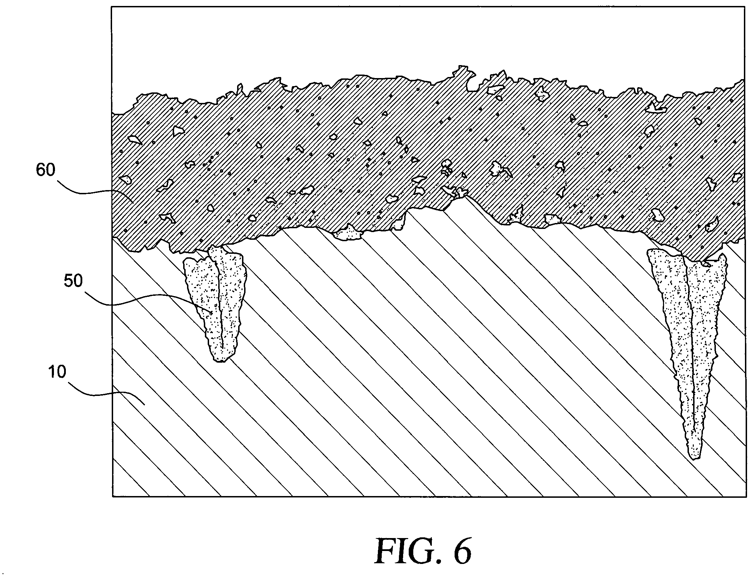

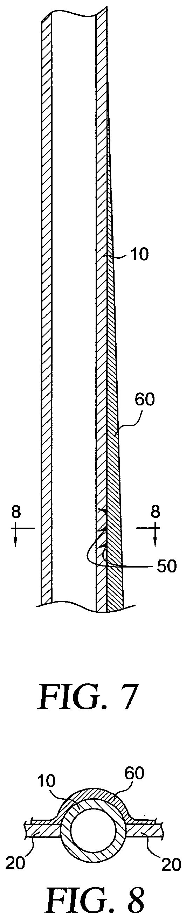

In one embodiment of the invention, there is provided a coated metallic tube. See Figure 7. The tube is defined by an axially elongated tubular sidewall 10 having a fatigue corrosion cracked outer section. See Figure 2. The fatigue corrosion cracked section has circumferentially extending cracks 50 projecting radially inwardly partway through the tubular sidewall. The cracks 50 generally contain corrosion products such as iron oxide and iron sulfide. See Figure 3. A metallic coating 60 is provided on the fatigue corrosion cracked section. The metallic coating 60 bridges the circumferentially extending cracks 50 and adheres tightly to metal portions of the tube 10 surrounding the crack, as well as to the corrosion products in the crack at least to some extent, preventing further significant corrosion products from reaching the crack. See Figure 6. The coated tubes can therefore be placed back into service.

Generally, the tube is formed of steel and the cracks in the fatigue corrosion cracked section extend circumferentially partially around an outer surface of the tube. The coating is generally selected from nickel/chrome/boron and chrome-free base metal/aluminum//titanium/silicon/boron as described hereinabove.

Both of the most preferred coatings can be built up to any desired thickness. It is expected the part of the coating on the tubes covering the cracks will be at least about 0.006 inches, (about 0.15 mm), for example, in the range of about 0.006 inches (0.15 mm) to about 0.020 inches (about 0.50 mm), although the coating could be thicker if desired, for example the range of about 0.020 to about 0.100 inches, (about 0.50 to about 2.5 mm). The cracks in the fatigue corrosion cracked section of the tube are preferably totally covered by the coating to prevent existing cracks from propagating and new cracks from forming.

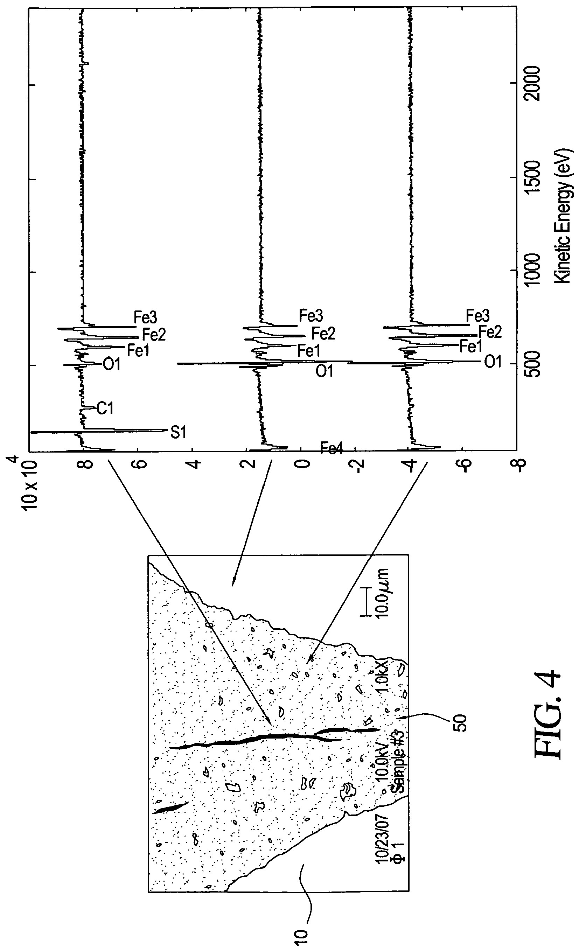

The cracks 50 in the fatigue corrosion cracked section of the tubing are generally "V" or "carrot" shaped when viewed in a longitudinal sectional plane which includes the axis of the tube and contain corrosion products. See Figure 3. The coating bridges the tops of the cracks. (See Figure 6). The cracks extend generally circumferentially. (See Figure 2) The cracks contain a concentration of chlorine and/or sulfur-containing material which is higher than in uncracked portions of the tube, particularly in a central "vein" of the crack. See Figure 4.

In another embodiment of the invention, there is provided a method for arresting fatigue corrosion cracking of a metallic tube. The method comprises identifying a section of the tube having the fatigue cracking, cleaning the section by particle impingement process, for example, sandblasting, and applying a metallic coating to the section by thermal spray technique to coat the section. The metallic coating is selected from nickel/chrome/boron and chrome-free base metal/aluminum//titanium/silicon/boron compositions.

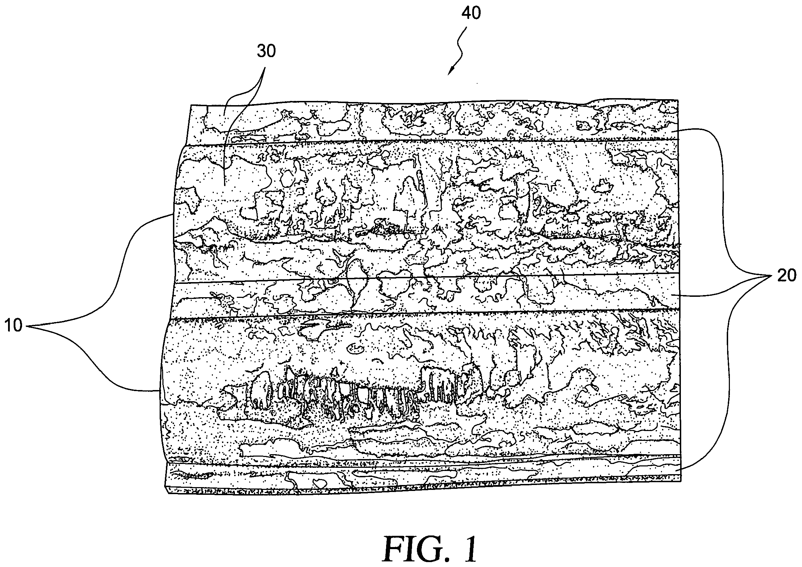

In Figure 1, the section of tube is contained in a section 40 of a tube wall formed by a plurality of tubes 10 interconnected by webbing 20. The tubes are covered by slag deposits 30. After cleaning, the section appears as in Figure 2, and the cracks 50 are better visible.

The thermal spray technique employs composite wires comprising a metallic outer sheath and a powdered inner core. Two types of coatings are expected to provide good results. The first comprises nickel/chrome/boron as described above. The second is a chrome-free nickel/aluminum//titanium/silicon/boron as described above.

The coatings are deposited by arc spraying a cored wire which contains the constituents for forming the coating. The wire is melted by the arc-based thermal spray technique to form a molten alloy coating composition, which is applied to the tubes to form the coating. The coating is generally applied to a thickness in the range of from about 0.5 mm to about 2.5 mm over the cracked area. The coating bridges the cracks and covers them from the outer environment. If desired, the coating can be tapered in thickness gradually longitudinally along the tube to avoid forming ledges or other abrupt surfaces.

## Claims

1. A coated metallic tube comprising:
an axially elongated tubular sidewall;
said tube having a fatigue corrosion cracked outer surface having circumferentially extending cracks projecting radially inwardly partway through the tubular sidewall and a metallic coating on the fatigue corrosion cracked section;
wherein the metallic coating is selected from thermally sprayed nickel/chrome/boron and thermally sprayed chrome-free base metal/aluminum//titanium/silicon/boron; and
said coating bridges the circumferentially extending cracks and adheres to metal portions of the tube and to corrosion products in the cracks.

2. A coated metallic tube as in claim 1 wherein the tube is formed of steel.

3. A tube as in claim 1 or 2 wherein the fatigue corrosion cracks extend circumferentially partially around an outer surface of the tube.

4. A tube as in one of the foregoing claims wherein the coating is nickel/chrome/boron comprising in bulk on a weight basis 39% to 66% Nickel, 29% to 51% Cr, and 2% to 8% B and wherein these components add up to 100%.

5. A tube as in one of claims 1 to 3 wherein the coating is chrome-free base metal/aluminum//titanium/silicon/boron and the base metal is selected from the group consisting of iron, nickel, cobalt, lead, zinc, copper, aluminum, and tin in an amount of 70% to 90% of the coating.

6. A tube as in claim 5 wherein the base metal is nickel in the amount of 70% to 90%, said coating further comprising 2% to 10% aluminum, 2% to 10% titanium, 2% to 10% silicon, and 2% to 10% boron.

7. A tube as in one of the foregoing claims wherein the coating has a thickness in the range of 0.15 mm to 2.5 mm.

8. A tube as in one of the foregoing claims wherein the cracks in the fatigue corrosion cracked section of the tube are totally covered by the coating.

9. A tube as in one of the foregoing claims wherein the cracks in the fatigue corrosion cracked section of the tubing appear generally "V" shaped in longitudinal section along an axis of the tube.

10. A tube as in one of the foregoing claims wherein the cracks contain a concentration of Chlorine and/or Sulfur-containing corrosion product material which is higher than in uncracked portions of the tube.

11. A method for arresting fatigue corrosion cracking in a section of a metallic tube, comprising:
identifying a section of the metallic tube having fatigue corrosion cracks;
cleaning an outer surface of said section by particle impingement process;
applying a metallic coating to said section by thermal spray technique to cover the outer surface of said section so as to fill the corrosion cracks; and
wherein said metallic coating is selected from nickel/chrome/boron and chrome-free base metal/aluminum//titanium/silicon/boron.

12. A method as in claim 11 wherein said thermal spray technique employs composite wires comprising a metallic outer sheath and a powdered inner core and the tube is a boiler tube situated in a tube wall.

13. A method as in claim 11 or 12 wherein the coating is nickel/chrome/boron comprising in bulk on a weight basis 39% to 66% Nickel, 29% to 51% Cr, and 2% to 8% B and wherein these components add up to 100%.

14. A method as in claim 11 wherein the coating is chrome-free nickel/aluminum//titanium/silicon/boron comprising in bulk in a weight basis, 70% to 90% nickel, 2% to 10% aluminum, 2% to 10% titanium, 2% to 10% silicon, and 2% to 10% boron.

15. A method as in one of claims 11 to 14 further comprising;
providing a cored wire containing a chrome constituent and a boron constituent in the core of the wire, said wire further comprising a nickel or nickel alloy outer sheath;
melting the wire by an arc-based thermal spray technique to form a molten alloy coating composition; and
applying the molten alloy composition to the tubes to form the coating.

16. A method as in claim 14 further comprising:
providing a cored wire containing a titanium constituent, a silicon constituent, and a boron constituent in the core of the wire, said wire further comprising a nickel/aluminum outer sheath,
melting the wire by an arc-based thermal spray technique to form a molten alloy coating composition, and
applying the molten alloy composition to the tubes to form the coating that adheres tightly to metal portions of the tube surrounding the cracks, as well as to the corrosion products in the cracks at least to some extent, preventing further significant corrosion products from reaching the crack and extending the crack.

17. A method as in one of claims 11 to 16 wherein the coating is formed to a thickness in the range of from 0.15 mm to 2.5 mm and covers the cracks.

## Patentansprüche

1. Eine beschichtete Metallröhre, umfassend:
eine axial längliche röhrenförmige Seitenwand;
wobei die Röhre eine durch Ermüdungskorrosion gebrochene Außenfläche mit Rissen, die um den Umfang verlaufen, die teilweise durch die röhrenförmige Seitenwand radial nach innen ragen, und eine metallische Beschichtung auf dem durch Ermüdungskorrosion gebrochenen Abschnitt aufweist;
wobei die metallische Beschichtung ausgewählt ist aus thermisch gesprühtem Nickel/Chrom/Bor und thermisch gesprühtem chromfreien Basismetall/Aluminium/Titan/Silizium/Bor; und
die Beschichtung die um den Umfang verlaufenden Risse überbrückt und an Metallteilen der Röhre und an Korrosionsprodukten in den Rissen haftet.

2. Eine beschichtete Metallröhre nach Anspruch 1, wobei die Röhre aus Stahl gebildet ist.

3. Eine Röhre nach Anspruch 1 oder 2, wobei die Ermüdungskorrosionsrisse teilweise um den Umfang um eine Außenfläche der Röhre verlaufen.

4. Eine Röhre nach einem der vorangehenden Ansprüche, wobei die Beschichtung Nickel/Chrom/Bor ist, umfassend als Masse auf einer Gewichtsbasis 39 % bis 66 % Nickel, 29 % bis 51 % Cr und 2 % bis 8 % B und wobei die Summe dieser Komponenten 100 % beträgt.

5. Eine Röhre nach einem der Ansprüche 1 bis 3, wobei die Beschichtung chromfreies Basismetall/Aluminium/Titan/Silizium/Bor ist und das Basismetall ausgewählt ist aus der Gruppe bestehend aus Eisen, Nickel, Kobalt, Blei, Zink, Kupfer, Aluminium und Zinn in einer Menge von 70 % bis 90 % der Beschichtung.

6. Eine Röhre nach Anspruch 5, wobei das Basismetall Nickel in der Menge von 70 % bis 90 % ist, die Beschichtung ferner 2 % bis 10 % Aluminium, 2 % bis 10 % Titan, 2 % bis 10 % Silizium und 2 % bis 10 % Bor umfassend.

7. Eine Röhre nach einem der vorangehenden Ansprüche, wobei die Beschichtung eine Dicke im Bereich von 0,15 mm bis 2,5 mm hat.

8. Eine Röhre nach einem der vorangehenden Ansprüche, wobei die Risse in dem durch Ermüdungskorrosion gebrochenen Abschnitt der Röhre vollständig von der Beschichtung bedeckt sind.

9. Eine Röhre nach einem der vorangehenden Ansprüche, wobei die Risse in dem durch Ermüdungskorrosion gebrochenen Abschnitt der Röhre im Längsschnitt entlang einer Achse der Röhre im Allgemeinen V-förmig aussehen.

10. Eine Röhre nach einem der vorangehenden Ansprüche, wobei die Risse eine Konzentration von chlor-und/oder schwefelhaltigem Korrosionsproduktmaterial enthalten, die höher als in ungebrochenen Bereichen der Röhre ist.

11. Ein Verfahren zum Anhalten von Ermüdungskorrosionsreißen in einem Abschnitt einer Metallröhre, umfassend:
Identifizieren eines Abschnitts der Metallröhre mit Ermüdungskorrosionsrissen;
Reinigen einer Außenfläche des Abschnitts durch ein Strahlpartikelverfahren;
Aufbringen einer metallischen Beschichtung auf den Abschnitt durch thermische Sprühtechnik, um die Außenfläche des Abschnitts zu bedecken, um somit die Korrosionsrisse zu füllen; und
wobei die metallische Beschichtung aus Nickel/Chrom/Bor und chromfreiem Basismetall/Aluminium/Titan/Silizium/Bor ausgewählt ist.

12. Ein Verfahren nach Anspruch 11, wobei die thermische Sprühtechnik Verbunddrähte einsetzt, umfassend eine metallische Außenhülle und einen pulverförmigen Innenkern, und die Röhre ein Kesselrohr ist, das sich in einer Röhrenwand befindet.

13. Ein Verfahren nach Anspruch 11 oder 12, wobei die Beschichtung Nickel/Chrom/Bor ist, umfassend als Masse auf einer Gewichtsbasis 39 % bis 66 % Nickel, 29 % bis 51 % Cr und 2 % bis 8 % B und wobei die Summe dieser Komponenten 100 % beträgt.

14. Ein Verfahren nach Anspruch 11, wobei die Beschichtung chromfreies Basismetall/Aluminium/Titan/Silizium/Bor ist, umfassend als Masse auf einer Gewichtsbasis 70 % bis 90 % Nickel, 2 % bis 10 % Aluminium, 2 % bis 10 % Titan, 2 % bis 10 % Silizium und 2 % bis 10 % Bor.

15. Ein Verfahren nach einem der Ansprüche 11 bis 14, ferner umfassend:
Bereitstellen eines Fülldrahts, der einen Chrombestandteil und einen Borbestandteil im Kern des Drahtes enthält, der Draht ferner eine Nickel- oder Nickellegierungsaußenhülle umfassend;
Schmelzen des Drahtes durch eine thermische Sprühtechnik auf Lichtbogenbasis zur Bildung einer geschmolzenen Legierungsbeschichtungszusammensetzung; und
Aufbringen der geschmolzenen Legierungszusammensetzung auf die Röhren zur Bildung der Beschichtung.

16. Ein Verfahren nach Anspruch 14, ferner umfassend:
Bereitstellen eines Fülldrahtes, der einen Titanbestandteil, einen Siliziumbestandteil und einen Borbestandteil im Kern des Drahtes enthält, der Draht ferner eine Nickel/Aluminiumaußenhülle umfassend,
Schmelzen des Drahtes durch eine thermische Sprühtechnik auf Lichtbogenbasis zur Bildung einer geschmolzenen Legierungsbeschichtungszusammensetzung und
Aufbringen der geschmolzenen Legierungszusammensetzung auf die Röhren zur Bildung der Beschichtung, die fest an Metallteilen der Röhre, die die Risse umgeben, wie auch an den Korrosionsprodukten in den Rissen zumindest in einem gewissen Ausmaß haftet, wodurch verhindert wird, dass weitere signifikante Korrosionsprodukte den Riss erreichen und den Riss ausweiten.

17. Ein Verfahren nach einem der Ansprüche 11 bis 16, wobei die Beschichtung zu einer Dicke im Bereich von 0,15 mm bis 2,5 mm gebildet ist und die Risse bedeckt.

## Revendications

1. Tube métallique revêtu comprenant :
une paroi latérale tubulaire axialement allongée ;
ledit tube ayant une surface externe fissurée par corrosion due à la fatigue ayant des fissures s'étendant de manière circonférentielle faisant saillie radialement vers l'intérieur partiellement dans la paroi latérale tubulaire et un revêtement métallique sur la section fissurée par corrosion due à la fatigue ;
dans lequel le revêtement métallique est choisi entre du nickel/chrome/bore projeté thermiquement et du métal de base exempt de chrome/aluminium//titane/silicium/bore projeté thermiquement ; et
ledit revêtement forme un pont entre les fissures s'étendant de manière circonférentielle et adhère à des parties métalliques du tube et à des produits de corrosion présents dans les fissures.

2. Tube métallique revêtu selon la revendication 1 dans lequel le tube est constitué d'acier.

3. Tube selon la revendication 1 ou 2 dans lequel les fissures de corrosion due à la fatigue s'étendent de manière circonférentielle en partie autour d'une surface externe du tube.

4. Tube selon l'une des revendications précédentes dans lequel le revêtement est du nickel/chrome/bore comprenant dans la masse sur une base pondérale 39 % à 66 % de nickel, 29 % à 51 % de Cr et 2 % à 8 % de B et dans lequel ces constituants totalisent 100 %.

5. Tube selon l'une quelconque des revendications 1 à 3 dans lequel le revêtement est du métal de base exempt de chrome/aluminium//titane/silicium/bore et le métal de base est choisi dans le groupe constitué par le fer, le nickel, le cobalt, le plomb, le zinc, le cuivre, l'aluminium et l'étain en une quantité de 70 % à 90 % du revêtement.

6. Tube selon la revendication 5 dans lequel le métal de base est le nickel en quantité de 70 % à 90 %, ledit revêtement comprenant en outre 2 % à 10 % d'aluminium, 2 % à 10 % de titane, 2 % à 10 % de silicium et 2 % à 10 % de bore.

7. Tube selon l'une des revendications précédentes dans lequel le revêtement a une épaisseur dans la plage de 0,15 mm à 2,5 mm.

8. Tube selon l'une des revendications précédentes dans lequel les fissures dans la section fissurée par corrosion due à la fatigue du tube sont totalement recouvertes par le revêtement.

9. Tube selon l'une des revendications précédentes dans lequel les fissures dans la section fissurée par corrosion due à la fatigue du tube ont une forme apparente généralement « en V » en coupe longitudinale le long d'un axe du tube.

10. Tube selon l'une des revendications précédentes dans lequel les fissures contiennent une concentration de matériau de produit de corrosion contenant du chlore et/ou du soufre qui est supérieure à celle dans des parties non fissurées du tube.

11. Procédé pour l'arrêt de la fissuration par corrosion due à la fatigue dans une section d'un tube métallique, comprenant :
l'identification d'une section du tube métallique ayant des fissures de corrosion due à la fatigue ;
le nettoyage d'une surface externe de ladite section par un processus de projection de particules ;
l'application d'un revêtement métallique sur ladite section par une technique de projection thermique pour recouvrir la surface externe de ladite section de manière à remplir les fissures de corrosion ; et
dans lequel ledit revêtement métallique est choisi entre du nickel/chrome/bore et du métal de base exempt de chrome/aluminium//titane/silicium/bore.

12. Procédé selon la revendication 11 dans lequel ladite technique de projection thermique emploie des fils composites comprenant une gaine externe métallique et une âme interne en poudre et le tube est un tube de chaudière situé dans une paroi tubulaire.

13. Procédé selon la revendication 11 ou 12 dans lequel le revêtement est du nickel/chrome/bore comprenant dans la masse sur une base pondérale 39 % à 66 % de nickel, 29 % à 51 % de Cr et 2 % à 8 % de B et dans lequel ces constituants totalisent 100 %.

14. Procédé selon la revendications 11 dans lequel le revêtement est du nickel exempt de chrome/aluminium//titane/silicium/bore comprenant dans la masse sur une base pondérale 70 % à 90 % de nickel, 2 % à 10 % d'aluminium, 2 % à 10 % de titane, 2 % à 10 % de silicium et 2 % à 10 % de bore.

15. Procédé selon l'une des revendications 11 à 14 comprenant en outre :
l'utilisation d'un fil fourré contenant un constituant au chrome et un constituant au bore dans l'âme du fil, ledit fil comprenant en outre une gaine externe en nickel ou en alliage de nickel ;
la fusion du fil par une technique de projection thermique à base d'arc pour former une composition de revêtement en alliage fondue ; et
l'application de la composition d'alliage fondue aux tubes pour former le revêtement.

16. Procédé selon la revendication 14 comprenant en outre :
l'utilisation d'un fil fourré contenant un constituant au titane, un constituant au silicium et un constituant au bore dans l'âme du fil, ledit fil comprenant en outre une gaine externe en nickel/aluminium,
la fusion du fil par une technique de projection thermique à base d'arc pour former une composition de revêtement en alliage fondue ; et
l'application de la composition d'alliage fondue aux tubes pour former le revêtement qui adhère fermement à des parties métalliques du tube entourant les fissures, ainsi qu'aux produits de corrosion présents dans les fissures au moins à un certain degré, ce qui empêche d'autres produits de corrosion en quantité importante d'atteindre la fissure et d'étendre la fissure.

17. Procédé selon l'une des revendications 11 à 16 dans lequel le revêtement est formé à une épaisseur dans la plage de 0,15 mm à 2,5 mm et recouvre les fissures.
